# FASCICULE DE BREVET EUROPEEN

(11) **EP 1 213 445 B1**
(45) Date de publication et mention de la délivrance du brevet: **17.08.2005**
(21) Numéro de dépôt: 01403139.7
(22) Date de dépôt: 06.12.2001
(51) Int. Cl.: F01D 15/12, F02C 7/36

(54) **Réducteur reprenant les efforts axiaux générés par la soufflante d'un turboréacteur**
Kompensation des Axialschubs eines Turbofans mittels eines Reduktionsgetriebes
Reducing gear balancing the forces generated by the fan of a turbo machine

(30) Priorité: 07.12.2000 FR 0015892
(43) Date de publication de la demande: 12.06.2002
(73) Titulaire: Hispano Suiza, 92700 Colombes (FR)
(72) Inventeur: Becquerelle, Samuel Raymond Germain, 78110 Le Vésinet (FR); Ville, Daniel Victor Marcel, 92360 Meudon la Forêt (FR)
(74) Mandataire: Nguyen, Dominique

(56) Documents cités:
- DE-C- 341 894
- FR-A- 998 179
- US-A- 4 380 897
- US-A- 4 651 521

## Description

L'invention concerne le domaine des turbomachines d'aviation à double flux.

Elle concerne plus précisément un turboréacteur comportant une soufflante entraînée en rotation par un réducteur de vitesse lui-même entraîné par un arbre de turbine, ledit réducteur de vitesse comportant un planétaire solidaire de l'arbre de turbine, une couronne solidaire de la soufflante et des satellites engrenant avec le planétaire et la couronne et portés par un porte-satellite solidaire de la structure du moteur, tel que connu par US-A-4 651 521.

Pour obtenir une pression de plus en plus grande, les moteurs aéronautiques ont un diamètre d'aspiration de plus en plus élevé. La taille des aubes est donc augmentée, mais elle doit respecter le critère de vitesse critique en bout d'aube. Ce critère étant le produit du rayon de la soufflante et de sa vitesse de rotation, si l'on veut augmenter le rayon tout en gardant constante la vitesse circonférentielle de l'extrémité des aubes, il faut alors diminuer la vitesse de rotation de la soufflante. C'est pour cette raison qu'un réducteur de vitesse est installé entre l'arbre de la turbine et l'arbre de la soufflante.

Mais les efforts aérodynamiques générés par l'inclinaison des aubes de soufflante, produisent des efforts axiaux qui sont repris par les paliers et la structure du moteur. Avec l'augmentation du diamètre de la soufflante, ces efforts sont considérablement augmentés et deviennent difficiles à maintenir. En effet, les paliers utilisés pour reprendre ces efforts voient leur diamètre et leur masse augmenter, ce qui pose des problèmes pour leur intégration dans le moteur.

Le but de l'invention est de proposer un turboréacteur tel que mentionné en introduction dans lequel les efforts axiaux à reprendre par les paliers de la soufflante sont diminués et les forces radiales compensant le couple de basculement généré sont réduites.

DE 341 894 C, US-A-4 380 897 ou FR 998 179 A proposent des solutions partielles où les satellites comportent une denture hélicoïdale qui coopère avec une denture hélicoïdale de la couronne afin que le réducteur crée sur la couronne des efforts axiaux qui compensent en partie les efforts axiaux générés par la soufflante.

Les paliers de la soufflante doivent être dimensionnés pour reprendre la différence entre les efforts axiaux générés par la soufflante et les efforts axiaux créés par le réducteur.

La création d'efforts axiaux à la périphérie du réducteur implique un couple de basculement au niveau de chaque satellite. Selon l'invention, afin de compenser ce couple de basculement, on crée un couple antagoniste avec des efforts radiaux générés au niveau des contacts entre les satellites, d'une part, et la couronne et le planétaire, d'autre part, en imposant un décalage axial entre les positions moyennes de la couronne et du planétaire.

Très avantageusement, la denture hélicoïdale des satellites coopère avec une denture hélicoïdale du planétaire afin que le réducteur crée sur le planétaire des efforts axiaux qui compensent en partie les efforts axiaux générés par la turbine d'entraînement.

Ainsi les efforts à reprendre par les paliers de turbine sont également diminués.

Les satellites génèrent donc sur la couronne des premiers efforts axiaux et sur le planétaire des deuxièmes efforts axiaux opposés et sensiblement égaux aux premiers efforts axiaux, dont la résultante appliquée sur les arbres des satellites est sensiblement nulle.

D'autres avantages et caractéristiques de l'invention ressortiront à la lecture de la description suivante faite à titre d'exemple et en référence aux dessins annexés dans lesquels :
la figure 1 est une vue schématique d'un turboréacteur à double flux selon l'invention,
la figure 2 est une demi-coupe selon un plan passant par l'axe de rotation du turboréacteur de la figure, et
la figure 3 montre schématiquement les forces appliquées dans les éléments du réducteur.

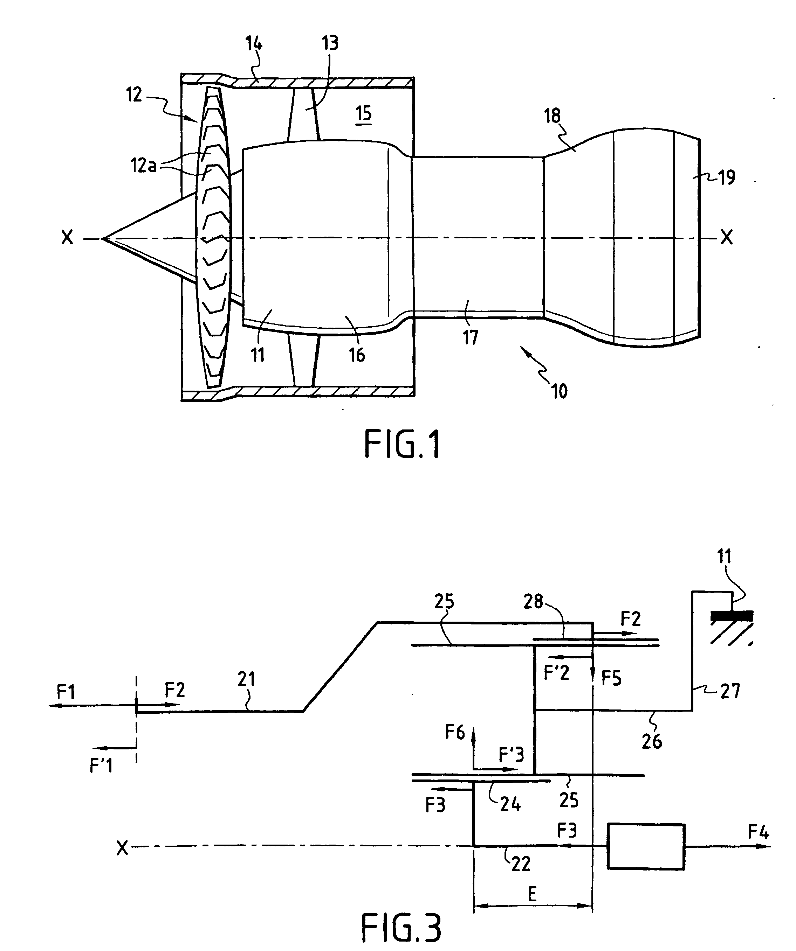

La figure 1 montre un turboréacteur 10 d'axe XX à double flux, qui comporte à l'avant d'un carter intérieur du moteur 11 une soufflante 12 entourée par un carter extérieur annulaire 14 qui définit avec le carter intérieur 11 un canal annulaire 15, traversé par des entretoises 13 reliant les carters 11 et 14.

Le flux d'air soufflé par les aubes de la soufflante 12 est divisé en deux flux, un flux secondaire passant par le canal annulaire 15 et un flux primaire traversant le moteur. Le flux primaire est comprimé dans une section de compresseur 16 avant d'être mélangé avec du carburant pour être brûlé dans une chambre de combustion 17. Les gaz chauds de combustion passent par une section de turbine 18 qui entraîne la section de compresseur 16 et la soufflante 12 avant de s'échapper par la tuyère 19.

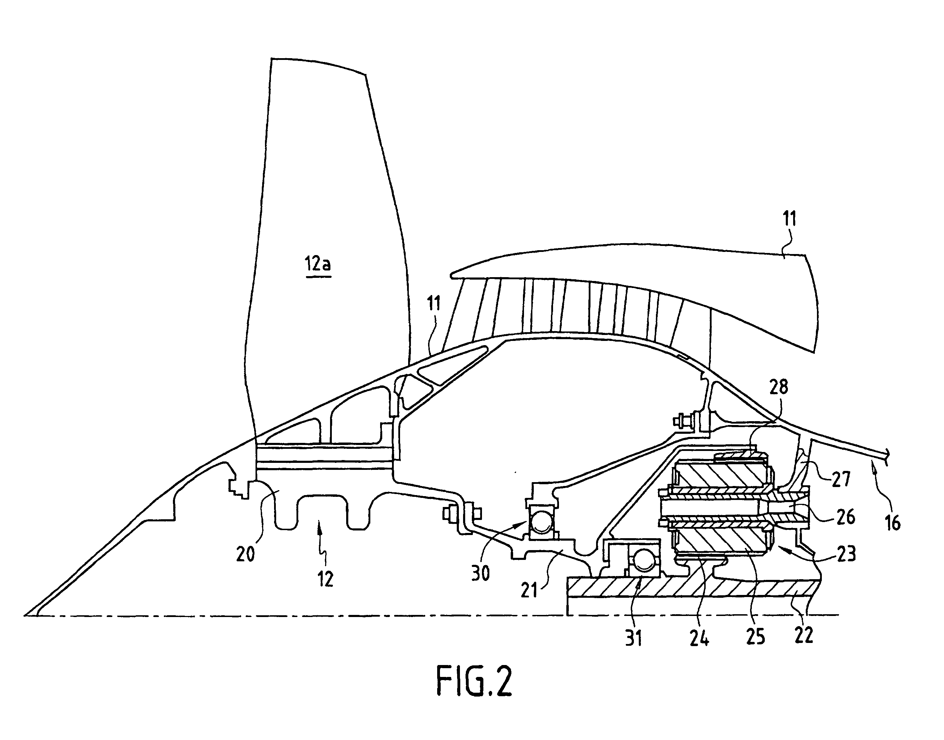

Ainsi que cela se voit plus clairement sur la figure 2, les aubes 12a de la soufflante 12 sont montées sur une jante de rotor 20 entraînée en rotation par un arbre de soufflante 21. L'arbre de soufflante 21 est entraîné par l'arbre de turbine 22 par l'intermédiaire d'un réducteur de vitesse 23. L'arbre de soufflante 21 et l'arbre de turbine 22 tournent dans des directions opposées.

Le réducteur de vitesse 23 comporte un planétaire 24 d'axe XX monté autour de l'arbre de turbine 22 et solidaire de ce dernier, des satellites 25 portés par des axes 26 fixés sur un porte-satellite 27 solidaire du carter intérieur 11 et une couronne 28 entourant les satellites 25. La couronne 28 est montée dans l'alésage intérieur de l'arbre de soufflante 21.

Les satellites 25 sont interposés entre le planétaire 24 et la couronne 28, et engrènent avec ces derniers par l'intermédiaire de dentures hélicoïdales. L'étendue axiale des dentures des satellites 25 est nettement supérieure à l'étendue axiale des dentures du planétaire 24 et de la couronne 28. La couronne 28 engrène avec les extrémités aval des satellites 25, tandis que le planétaire 24 engrène avec les extrémités amont des satellites 25, l'amont et l'aval étant définis par rapport au sens de l'écoulement gazeux à travers la soufflante 12.

Le sens des dentures hélicoïdales des satellites 25 est tel qu'en fonctionnement, les satellites 25 exercent sur la couronne 28 une force axiale F2 (voir la figure 3) dirigée vers l'aval et sur le planétaire 24 une force axiale F3 dirigée vers l'amont. De préférence, les forces axiales F2 et F3 ont la même intensité afin que la résultante de ces deux forces reprise par les axes 26 soit aussi faible que possible.

La force axiale F2 est dans le sens opposé à la force axiale F1 générée par la soufflante 12. La référence F'1 montre la résultante axiale de ces deux forces qui doit être reprise par le palier 30 interposé entre l'arbre de soufflante 21 et le carter intérieur 11 et le palier 31 interposé entre l'arbre de soufflante 21 et l'extrémité amont de l'arbre de turbine 22. La force axiale F3 est dans le sens opposé à la force axiale F4 exercée par la turbine entraînant l'arbre de turbine 22.

Par réaction, la couronne 28 et le planétaire 24 exercent sur les satellites 25 des forces axiales F'2 et F'3 égales et opposées à F2 et F3 qui exercent sur chaque satellite 25 un couple de basculement. Les références F5 et F6 désignent les forces radiales mises en jeu au niveau des engrènements pour compenser le couple de basculement généré par les forces axiales F2 et F3. Les forces F5 et F6 qui sont normalement égales et opposées sont d'autant plus faibles que l'écart axial E entre les positions moyennes du planétaire 24 et de la couronne 28 est grand.

L'avantage de l'invention est de diminuer considérablement les efforts axiaux supportés par les paliers de la soufflante 12 et permettre aux paliers de rester dans des dimensions et masse plus faciles à intégrer dans un moteur.

Avec un réducteur planétaire, il est en outre possible de contrer les efforts axiaux F4 générés par la turbine et diminuer en conséquence les dimensions et masse des paliers de support de la turbine.

## Revendications

1. Turboréacteur comportant une soufflante (12) entraînée en rotation par un réducteur de vitesse (23) lui-même entraîné par un arbre de turbine (22), ledit réducteur de vitesse (23) comportant un planétaire (24) solidaire de l'arbre de turbine (22), une couronne (28) solidaire de la soufflante (12) et des satellites (25) engrenant avec le planétaire (24) et la couronne (28) et portés par un porte-satellite (27) solidaire de la structure (11) du moteur,
les satellites (25) comportant une denture hélicoïdale coopérant avec une denture hélicoïdale de la couronne (28), afin que le réducteur (23) crée sur la couronne (28) des efforts axiaux qui compensent en partie les efforts axiaux générés par la soufflante (12),
**caractérisé par le fait que** les positions moyennes de la couronne et du planétaire par rapport aux satellites sont décalées axialement.

2. Turboréacteur selon la revendication 1, **caractérisé par le fait que** la denture hélicoïdale des satellites coopère avec une denture hélicoïdale du planétaire afin que le réducteur crée sur le planétaire des efforts axiaux qui compensent en partie les efforts axiaux générés par la turbine entraînant l'arbre de turbine.

## Patentansprüche

1. Turbine, aufweisend eine Gebläse (12), welches mittels einer Geschwindigkeit-Reduktions-Vorrichtung (23) in Rotation versetzt wird, welche ihrerseits mittels einer Turbinen-Welle (22) angetrieben wird, wobei die genannte Geschwindigkeits-Reduktions-Vorrichtung (23) ein mit der Turbinen-Welle (22) verbundenes Planeten-Rad (24), einen mit dem Gebläse (12) verbundenen Kranz (28) und mit dem Planeten-Rad (24) und dem Kranz (28) verzahnte, und von einem mit der Motor-Struktur (11) verbundenen Satelliten-Träger (27) getragene Satelliten (25)aufweist,
wobei die Satelliten (25) eine helixförmige Zahnung aufweisen, welche mit einer helixförmigen Zahnung des Kranzes (28) dahingehend zusammenwirkt, dass die Reduktions-Vorrichtung (23) auf den Kranz (28) Axial-Kräfte ausübt, welche teilweise die von dem Gebläse (12) erzeugten Axial-Kräfte kompensieren,
**dadurch gekennzeichnet, dass** die Mitten-Positionen des Kranzes und des Planeten-Rades gegenüber den Satelliten axial versetzt sind.

2. Turbine gemäß Anspruch 1, **dadurch gekennzeichnet, dass** die helixförmige Zahnung der Satelliten mit einer helixförmigen Zahnung des Planeten-Rades dahingehend zusammenwirkt, dass die Reduktions-Vorrichtung auf das Planeten-Rad Axial-Kräfte ausübt, welche die von der die Turbinen-Welle antreibenden Turbine erzeugten Axial-Kräfte teilweise kompensieren.

## Claims

1. Turbojet engine comprising a fan (12) driven in rotation by a speed reducer (23) itself driven by a turbine shaft (22), the said speed reducer (23) comprising a sun gear (24) secured to the turbine shaft (22), an annulus gear (28) secured to the fan (12), and planet gears (25) meshing with the sun gear (24) and the annulus gear (28) and borne by a planet carrier (27) secured to the structure (11) of the engine, the planet gears (25) comprising helical teeth collaborating with helical teeth on the annulus gear (28) so that the reducer (23) creates, on the annulus gear (28), axial forces which partially compensate for the axial forces generated by the fan (12), **characterized in that** the central positions of the annulus gear and of the sun gear with respect to the planet gears are axially offset.

2. Turbojet engine according to Claim 1, **characterized in that** the helical teeth of the planet gears collaborates with helical teeth of the sun gear in such a way that the reducer creates on the sun gear axial forces which partially compensate for the axial forces generated by the turbine driving the turbine shaft.
